# EUROPEAN PATENT APPLICATION

(11) **EP 4 276 803 A1**
(43) Date of publication of application: **15.11.2023**
(21) Application number: 22739557.1
(22) Date of filing: 05.01.2022
(51) Int. Cl.: G09F 3/00, H01M 4/04, G09F 3/10, B32B 7/06, B32B 27/36, C08J 7/04, C09J 7/25, C09J 7/40, G09F 3/02

(54) **BOTH SIDE-RECOGNIZABLE LABEL FOR IDENTIFYING DEFECTIVE PORTION OF ELECTRODE FOR SECONDARY BATTERY AND MANUFACTURING METHOD THEREFOR**

(30) Priority: 14.01.2021 KR 20210005018
(71) Applicant: Cho, Eun Mi, Daegu 42279 (KR)
(72) Inventor: Cho, Eun Mi, Daegu 42279 (KR)
(74) Representative: RGTH
(86) International application number: PCT/KR2022/000153
(87) International publication number: WO 2022/154359

(57) **Abstract**

The present invention pertains to a both side-recognizable label for identifying a defective portion of an electrode for a secondary battery and a manufacturing method therefor and, more particularly, to a both side-recognizable label for identifying a defective portion of an electrode for a secondary battery, which allows both the surface and rear surface of the label for identifying the defective portion of the electrode for the secondary battery to be recognized by a sensor so that the defective portion of the electrode for the secondary battery may be easily identified even when the sensor is installed at a different place in each manufacturing line. The present invention, in a case in which the system configurations of manufacturing lines for producing electrodes for secondary batteries are inconsistent and differ, allows the defective portion of the electrode for the secondary battery to be easily identified no matter which of the surfaces and surfaces of the label the sensor is located at, and allows a user to easily recognize a site which is as far as an adhesive layer is formed, and thus, there is an advantage in that user convenience may be facilitated.

## Description

### Technical Field

The present invention relates to a both side-recognizable label for identifying a defective portion of an electrode for a secondary battery and a manufacturing method therefor, more particularly to a both side-recognizable label for identifying a defective portion of an electrode for a secondary battery and a manufacturing method therefor that are capable of allowing both of surface and rear surface of the label to be recognized by a sensor, so that even if the sensor is installed at different places according to manufacturing lines, both sides of the label are recognized by the sensor to easily identify the defective portion of the electrode for the secondary battery.

### Background Art

Generally, an active material, a conductive material, and a binder are coated onto a current collector that is a thin layer having a low thickness and then dried to manufacture an electrode for a secondary battery. In a process of manufacturing the electrode for the secondary battery to the shape of a foil, external impurities may be added when the active material is coated onto the surface of the current collector, thereby causing defects, and otherwise, the active material may not be coated uniformly onto the surface of the current collector, thereby causing the defects occurring from the electrode itself. After the electrode for the secondary battery has been manufactured, accordingly, it is wound onto a roll, and it is checked whether a defect on the entire surface of the electrode exists. If so, the defect is marked on the electrode, while the electrode is being unwound from the roll. Next, the electrode is wound onto another roll and thus packaged or transferred for cutting, so that the defect marked on the surface of the electrode is eliminated to permit only the normal portion of the electrode to be used.

As demands for the electrode for the secondary battery have been increased, further, an automated production process is introduced, and so as to easily mark a defective portion on the surface of the electrode for the secondary battery in the automated production process and to prevent new defects caused by an adhesive from occurring, an amount of adhesive and a position of adhesive are optimizedly adjusted in the Prior art patent 1 as suggested below as filed by the same applicant as the invention, which already discloses a label for identifying a defective portion of an electrode for a secondary battery that is capable of minimizing the possibility of a secondary damage or defect on the surface of the foil-shaped electrode for the secondary battery.

In the Prior art patent 1, however, only when a sensor is located on a side of a label where a silicone cure resin layer is formed, a defective portion of the electrode for the second battery is identified, and the sensor does not identify a position where the label is attached on the rear surface of an adhesive layer of the label where no color layer is formed. In specific, as production processes become diverse, the attachment positions of the sensor are varied according to the production processes, and accordingly, the label that is recognized by the sensor only on surface thereof has limitations in the usability thereof.

Accordingly, there is a need to develop a label for identifying a defective portion of an electrode for a secondary battery, which is easily and accurately recognized by a sensor to identify the defective portion of the electrode even if the sensor is attached to any position in a production process for the electrode for the secondary battery, while still having the advantages of the label as disclosed in the Prior art patent 1.

### [Prior art literature]

Prior art patent 1: Korean Patent No. 10-1330880 (November 12, 2013)

### Disclosure

### Technical Problem

Accordingly, the present invention has been made in view of the above-mentioned problems occurring in the related art.

It is an object of the present invention to provide a both side-recognizable label for identifying a defective portion of an electrode for a secondary battery and a manufacturing method therefor that are capable of easily identifying the defective portion of the electrode for the secondary battery even if configurations of devices on a manufacturing line for producing the electrode for the secondary battery are different to cause a sensor to be located on surface or rear surface of the label.

It is another object of the present invention to provide a both side-recognizable label for identifying a defective portion of an electrode for a secondary battery and a manufacturing method therefor that are capable of having adhesive layer marking portions formed thereon to allow a user to easily recognize the position of an adhesive layer formed thereon, thereby improving the conveniences of the user and achieving uniform label attachment to thus accurately identify the defective portion of the electrode for the secondary battery.

### Technical Solution

To accomplish the above-mentioned objects, according to one aspect of the present invention, a both side-recognizable label for identifying a defective portion of an electrode for a secondary battery may include: a release paper having a silicone resin coated onto one surface thereof in such a way as to have a silicone resin layer formed integrally therewith; an adhesive layer formed by applying an acrylic removable adhesive to 25 to 50% of the entire area of the release paper on one side of top of the silicone resin layer coated onto the release paper, the adhesive layer having a thickness of 5 to 30 pm; and a base film covered on top of the adhesive layer to correspond to the entire area of the release paper, made of a transparent synthetic resin, and having a first color layer coated with a color and identifiable using a given sensor, a white color layer coveredly coated onto the first color layer, and a second color layer coveredly coated with a given color onto the white color layer and identifiable using the sensor sequentially coated onto a side toward the adhesive layer.

In this case, the acrylic removable adhesive is made by means of polymerization of acrylic monomers and has acrylic polymers as a subject thereof. Preferably, acrylic acid ester, methacrylic acid ester, and the like are used as the acrylic removable adhesive. To ensure high adhesion to a wide surface and to prevent a secondary electrode defect from being made due to the leakage of the adhesive to the outside when the adhesive is attached to the electrode, the acrylic removable resin may be preferably adopted. An adhesion value as required in the present invention is in the range of 100 to 800 gr/25 mm when the attached product is removed at an angle of 90° from a measuring instrument and in the range of 100 to 1400 gr/25 mm when the attached product is removed at an angle of 180° from the measuring instrument. Further, the adhesive layer preferably has a thickness of 5 to 30 µm, and when the adhesive layer is formed in the above-mentioned thickness, the adhesive is prevented from leaking to the outside due to a pressure applied in the step of winding the electrode for the secondary battery after the check for a defective portion of the electrode for the secondary battery has been performed.

The base film is made of one selected from polyethylene terephthalate (PET), polypropylene (PP), oriented polypropylene (OPP), and polyimide (PI). When the base film is made of the transparent synthetic resin, it is easy to identify the first color layer and the second color layer on surface and rear surface of the label. In this case, the hardness of the base film is different according to the kind of base film, and accordingly, the base film is adjusted in thickness according to the hardness thereof. If the base film is made of a relatively hard material such as PET or PP, the thickness is preferably not greater than 38 µm, and if the base film is made of a relatively soft material such as OPP or PI, the thickness is preferably greater than 40 um. Therefore, the base film constituting the label according to the present invention has a thickness of 16 to 50 pm, which is of course varied according to the material of the base film. The thickness of the base film is adjusted to prevent the attached mark of the label from remaining on a foil when the foil made as the electrode for the secondary battery is wound. Further, if the base film is made of PET, the label according to the present invention may further include a silicone cure resin layer formed by coating a silicone resin onto top of the base film and curing the silicone resin by means of ultraviolet light, and preferably, the silicone cure resin layer may have a thickness of 2 to 5 µm. The silicone cure resin layer is needed to minimize the application of the secondary contamination or influence of the electrode for the secondary battery coming into contact with the label when the electrode is wound after the check for a defective portion of the electrode for the secondary battery has been performed. However, if the base film is made of PP or OPP, the formation of the silicone cure resin layer causes the color recognition rate for the defective portion through an infrared sensor to be reduced to thus generate errors, and in this case, accordingly, it is not desirable to form the silicone cure resin layer.

The sensor used to identify the defective portion of the electrode for the secondary battery is any one of a color sensor and an infrared sensor, and if the sensor for identifying colors is used, the first color layer and the second color layer have various colors, and if the infrared sensor is used, a red color easily identified by the infrared sensor is applied to both of the first color layer and the second color layer. Even if the sensor is located at any position of an automatic manufacturing process for the electrode for the secondary battery, the defective portion of the electrode for the secondary battery is easily identified by means of the sensor located on surface of the label, that is, from an upward direction toward a downward direction and the sensor located on rear surface of the label, that is, from a downward direction toward an upward direction. In this case, the color sensor for identifying colors according to the colors of the first color layer and the second color layer and the infrared sensor for identifying only the red color may be selectively adopted.

Moreover, preferably, the first color layer, the white color layer, and the second color layer of the base film each have a thickness of 2 to 5 µm. If the colors are identified by the color sensor or infrared sensor, the white color layer is formed between the first color layer and the second color layer so that the colors are accurately identified on both of surface and rear surface of the label and the different colors of the first color layer and the second color layer are prevented from being seen through them or mixed with each other.

The label according to the present invention may further include concave groove-shaped adhesive layer marking portions formed on any one or more portions of top and underside connected to a boundary of a portion on which the adhesive layer is formed. The adhesive layer marking portions allow a user to detach the label from the release paper and prevent the attached states of labels conducted by the user from being irregular. Moreover, when the label is attached to the defective portion of the electrode for the secondary battery, the position of the adhesive layer formed is easily recognized to improve the conveniences of the user.

The adhesive layer marking portions are formed, by forming a concave groove in a certain shape by a punching process, on any one or more portions of top and underside connected to a boundary of the portion on which the adhesive layer is formed. In this case, the concave groove may have the shape of a semicircle, a semi-octagon, a semi-square, a semi-polygon, and the like.

To accomplish the above-mentioned objects, according to another aspect of the present invention, a method for manufacturing a both side-recognizable label for identifying a defective portion of an electrode for a secondary battery, the method including the steps of: preparing a base film made of a transparent synthetic resin; coating a first color onto the rear surface of the base film and then drying the coated first color to form a first color layer; coveredly coating a white color onto the surface of the first color layer and then drying the coated white color to form a white color layer; coveredly coating a second color onto the surface of the white color layer and then drying the coated second color to form a second color layer; applying an acrylic removable adhesive to 25 to 50% of the entire area of top of the release paper on which a silicone resin layer is formed to form an adhesive layer; and adhesively coupling top of the release paper on which the adhesive layer is formed to the second color layer of the base film.

In this case, the method according to the present invention may further include, after the step of forming the second color layer, the step of coating a silicone resin onto top of the base film and then curing the coated silicone resin through irradiation of ultraviolet light thereonto to form a silicone cure resin layer.

Further, the method according to the present invention may further include, after the step of coupling the release paper to the second color layer of the base film, the step of forming concave groove-shaped adhesive layer marking portions, by punching a uniform shape, on any one or more portions of top and underside connected to a boundary of a portion on which the adhesive layer is formed.

### Advantageous Effects of Invention

Even if configurations of devices on a manufacturing line for producing the electrode for the secondary battery are different to cause the sensor to be located on surface or rear surface of the label, the label according to the present invention easily identifies the defective portion of the electrode for the secondary battery.

Further, the label according to the present invention has the adhesive layer marking portions to allow the user to easily recognize the position of the adhesive layer formed thereon, thereby improving the conveniences of the user and achieving the uniform attachment to thus more accurately identify the defective portion of the electrode for the secondary battery.

### Brief Description of Drawings

FIG. 1 is a top view showing a label according to the present invention that is seen from the outside.
FIG. 2 is a sectional view taken along the line A-A' of the label according to the present invention.
FIG. 3 is a flowchart showing a method for manufacturing the label according to the present invention.

### [Explanations of reference numerals]

100: Release paper 110: Silicone resin layer
200: Adhesive layer
300: Base film 310: First color layer
320: White color layer 330: Second color layer
400: Silicone cure resin layer
500: Adhesive layer marking portion
S100: Base film preparation step S200: First color layer formation step
S300: White color layer formation step S400: Second color layer formation step
S500: Silicone cure resin layer formation step
S600: Adhesive layer formation step S700: Release paper lamination step
S800: Adhesive layer marking portion formation step

### Mode for Invention

Hereinafter, an embodiment of the present invention will be described with reference to the accompanying drawings.

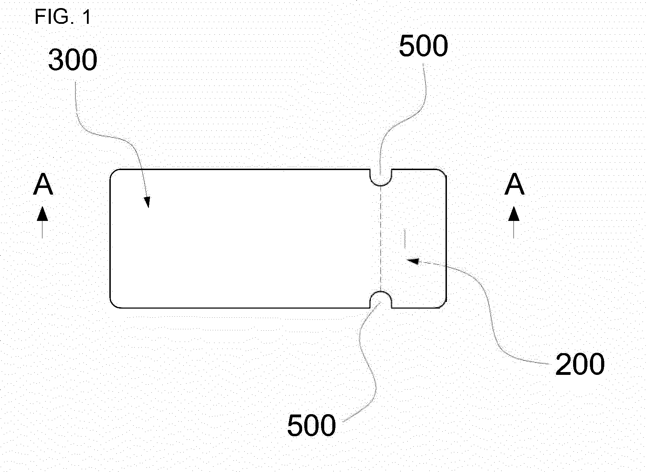

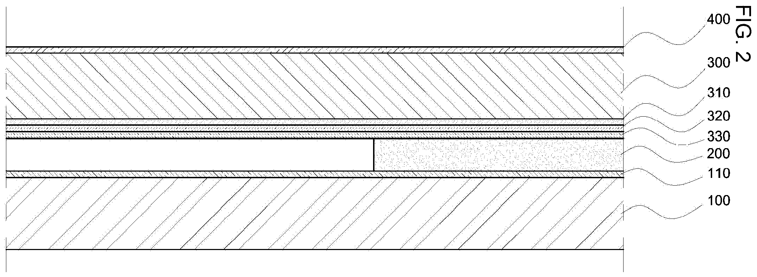

FIG. 1 is a top view showing a label according to the present invention that is seen from the outside, and FIG. 2 is a sectional view taken along the line A-A' of the label according to the present invention.

According to an embodiment of the present invention, a label includes a release paper 100 having a silicone resin layer 110 formed integrally with one surface thereof, an adhesive layer 200 formed by applying an adhesive to about 30% of one surface of the silicone resin layer 110, and a base film 300 covered on top side of the adhesive layer 200 and having a first color layer 310, a white color layer 320, and a second color layer 330 sequentially coated on the rear surface toward the adhesive layer 200. The first color layer 310, the white color layer 320, and the second color layer 330 each have a thickness of 2 to 3 pm, and even under such thicknesses, the colors of the first color layer 310 and the second color layer 330 are prevented from being seen through them or mixed with each other.

In this case, the base film 300 is made of a PET material, and if the base film 300 is made of the PET material, a silicone cure resin layer 400 is necessarily coated onto surface of the base film 300.

To show a relation in which the adhesive layer 200 is located under the base film 300 in FIG. 1, further, the portion of the adhesive layer 200 hidden by the base film 300 is denoted with a dotted line for the sake of understanding.

Moreover, the adhesive layer 200 is formed to have 25 to 50% of the entire area of one surface of the release paper 100, so that after the release paper 100 is easily separated from the label by a user, the label is attached to an electrode foil, and next, the label attached once is easily removed from the electrode foil. However, if the area of the adhesive layer 200 is less than 25% of the entire area of one surface of the release paper 100, the base film 300 may be easily detached from the release paper 100, and accordingly, a minimal area of the adhesive layer 200 is restricted to 25% of the entire area of one surface of the release paper 100. On the one hand, if the area of the adhesive layer 200 is greater than 50% of the entire area of one surface of the release paper 100, the surface of the label attached to the surface of the electrode for the secondary battery is attached to the shape of a tag, and accordingly, if the adhesive layer is formed even on the surface serving as the tag, a damage may be applied to another non-defective portion of the electrode. According to the present invention, preferably, the adhesive layer 200 is formed to have about 30% of the entire area of one surface of the release paper 100. According to the present invention, the adhesive layer has a thickness of 10 to 20 µm in consideration of the area formed thereof in such a way as to have a sufficient adhesive force and be not easily separated from the release paper 100.

Further, the label according to the present invention includes semicircular concave groove-shaped adhesive layer marking portions 500 formed on top and bottom connected to the adhesive layer 200 to enhance the user's conveniences on a working site. In this case, the adhesive layer marking portions 500 may be formed at any one or more sides of the portions of top and underside of the label connected to the boundary line of the adhesive layer 200, and according to the present invention, the adhesive layer marking portions 500 are formed to the shapes of the semicircular concave grooves on top and underside of the label.

Further, the silicone resin layer 110 may be coated onto the release paper 100 through additional coating, but according to the present invention, preferably, the silicone resin layer 110 is formed integrally with top of the release paper 100, thereby reducing a manufacturing process of the label.

According to the present invention, moreover, the base film 300 has a thickness of 38 pm, and to prevent no traces from remaining on the electrode foil after the electrode foil has been wound and unwound and to prevent no marks from remaining even on the rear surface of the electrode of the secondary battery, the silicone cure resin layer 400 is formed separately. In this case, the silicone cure resin layer 400 has a thickness of about 2 to 3 µm.

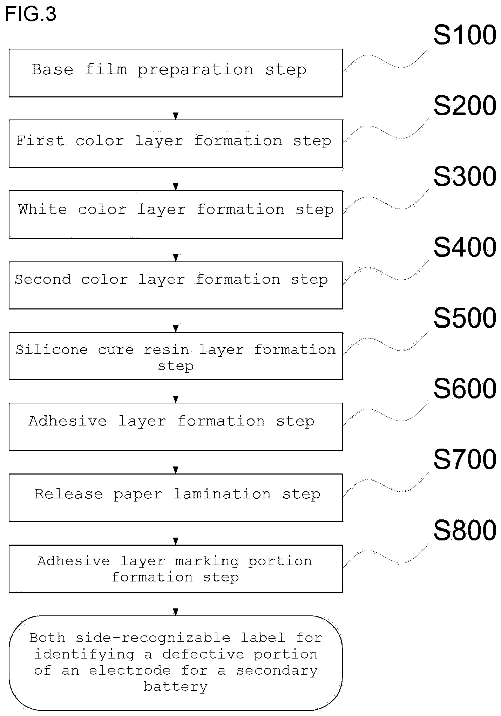

FIG. 3 is a flowchart showing a method for manufacturing the label according to the present invention.

A base film preparation step S100 is a step in which a base film made of a transparent synthetic resin is prepared. According to the present invention, the base film is made of a PET material and has a thickness of 38 µm.

A first color layer formation step S200 is a step in which a first color is coated onto the rear surface of the base film that is laminated onto surface of a release paper and dried to form a first color layer. After the first color layer formation step S200, the pigment coated onto the first color layer is completely dried, and next, the base film onto which the first color layer is coated is wound.

A white color layer formation stepS300 is a step in which a white color pigment is coveredly coated onto top of the first color layer and then dried to form a white color layer, while the base film onto which the first color layer is coated is being unwound. Next, the base film onto which the white color layer is coated is wound again to prepare a second color layer formation step.

The second color layer formation step S400 is a step in which a second color pigment is coveredly coated onto top of the white color layer and then dried to form a second color layer, while the base film onto which the first color layer and the white color layer are coated sequentially is being unwound.

The thicknesses of the first color layer, the white color layer, and the second color layer are determined according to amounts of pigments used in the respective steps and the number of coating times.

A silicone cure resin layer formation step S500 is a step in which a silicone resin is coated onto top of the base film and cured by irradiation with ultraviolet light thereonto to form a silicone cure resin layer. If the base film is made of the PET material, the silicone cure resin layer has to be necessarily coated onto top of the base film, so that no damage is applied to the electrode for the secondary battery and even if the label of the present invention is caught in the electrode foil wound, it has no bad influence on the electrode.

An adhesive layer formation step S600 is a step in which an acrylic removable adhesive is applied only to 25 to 50% of the entire area of top of the release paper on which a silicone resin layer is formed to thus form an adhesive layer. As mentioned above, the silicone resin layer may be coated additionally onto the release paper, but preferably, the release paper on which the silicone resin layer is formed through pre-processing is adopted.

After the adhesive layer formation step S600, a release paper lamination step S700 is carried out to adhesively couple top of the release paper on which the adhesive layer is formed to the second color layer of the base film, thereby manufacturing the label of the present invention.

After the release paper lamination step S700, further, an adhesive layer marking portion formation step S800 is preferably provided in addition to form semicircular concave groove-shaped adhesive layer marking portions on top and underside of the label connected with the boundary of the portion forming the adhesive layer, thereby enhancing the user's conveniences and allowing the position of the adhesive layer formed to be easily recognized by the user.

## Claims

1. A both side-recognizable label for identifying a defective portion of an electrode for a secondary battery, the both side-recognizable label comprising:
a release paper having a silicone resin coated onto one surface thereof in such a way as to have a silicone resin layer formed integrally therewith;
an adhesive layer formed by applying an acrylic removable adhesive to 25 to 50% of the entire area of the release paper on one side of top of the silicone resin layer coated onto the release paper, the adhesive layer having a thickness of 5 to 30 pm; and
a base film covered on top of the adhesive layer to correspond to the entire area of the release paper, made of a transparent synthetic resin, and having a first color layer coated with a given color and identifiable using a sensor, a white color layer coveredly coated onto the first color layer, and a second color layer coveredly coated with a given color onto the white color layer and identifiable using the sensor sequentially coated onto a side toward the adhesive layer.

2. The both side-recognizable label according to claim 1, wherein the base film is made of one selected from polyethylene terephthalate (PET), polypropylene (PP), oriented polypropylene (OPP), and polyimide (PI).

3. The both side-recognizable label according to claim 2, further comprising a silicone cure resin layer formed by coating a silicone resin onto another surface of the base film and curing the silicone resin by means of ultraviolet light if the base film is made of polyethylene terephthalate.

4. The both side-recognizable label according to claim 3, wherein the silicone cure resin layer has a thickness of 2 to 5 µm.

5. The both side-recognizable label according to claim 1, wherein the base film has a thickness of 16 to 50 µm.

6. The both side-recognizable label according to claim 1, wherein the sensor is any one of a color sensor and an infrared sensor.

7. The both side-recognizable label according to any one of claims 1 to 6, wherein the first color layer, the white color layer, and the second color layer each have a thickness of 2 to 5 µm.

8. The both side-recognizable label according to any one of claims 1 to 6, further comprising concave groove-shaped adhesive layer marking portions formed on any one or more portions of top and underside connected to a boundary of a portion on which the adhesive layer is formed.

9. The both side-recognizable label according to claims 7, further comprising concave groove-shaped adhesive layer marking portions formed on any one or more portions of top and underside connected to a boundary of a portion on which the adhesive layer is formed.

10. A method for manufacturing a both side-recognizable label for identifying a defective portion of an electrode for a secondary battery, the method comprising the steps of:
preparing a base film made of a transparent synthetic resin;
coating a first color onto the rear surface of the base film and then drying the coated first color to form a first color layer;
coveredly coating a white color onto the surface of the first color layer and then drying the coated white color to form a white color layer;
coveredly coating a second color onto the surface of the white color layer and then drying the coated second color to form a second color layer;
applying an acrylic removable adhesive to 25 to 50% of the entire area of surface of the release paper on which a silicone resin layer is formed to form an adhesive layer; and
adhesively coupling surface of the release paper on which the adhesive layer is formed to the second color layer of the base film.

11. The method according to claim 10, after the step of forming the second color layer, further comprising the step of coating a silicone resin onto a surface of the base film and then curing the coated silicone resin by irradiation with ultraviolet light thereonto to form a silicone cure resin layer.

12. The method according to claim 10 or 11, after the step of coupling the release paper to the second color layer of the base film, further comprising the step of forming concave groove-shaped adhesive layer marking portions, by punching a uniform shape, on any one or more portions of top and underside connected to a boundary of a portion where the adhesive layer is formed.
